# EUROPEAN PATENT APPLICATION

(11) **EP 4 568 371 A1**
(43) Date of publication of application: **11.06.2025**
(21) Application number: 23864613.7
(22) Date of filing: 06.09.2023
(51) Int. Cl.: H04W 56/00

(54) **CLOCK SYNCHRONIZATION METHOD, ELECTRONIC DEVICE, SYSTEM, AND STORAGE MEDIUM**

(30) Priority: 14.09.2022 CN 202211125142
(71) Applicant: Huawei Technologies Co., Ltd., Shenzhen, Guangdong 518129 (CN)
(72) Inventor: LI, Donghua, Shenzhen, Guangdong 518129 (CN); LIU, Kuangyu, Shenzhen, Guangdong 518129 (CN); REN, Han, Shenzhen, Guangdong 518129 (CN); LI, Jie, Shenzhen, Guangdong 518129 (CN); MA, Erli, Shenzhen, Guangdong 518129 (CN)
(74) Representative: Goddar, Heinz J.
(86) International application number: PCT/CN2023/117190
(87) International publication number: WO 2024/055881

(57) **Abstract**

This application provides a clock synchronization method and system, an electronic device, and a storage medium. The method includes: obtaining an inertial measurement unit IMU signal of a secondary clock device and an IMU signal of a primary clock device, where the primary clock device is a device that passively performs clock synchronization; determining a signal phase offset based on the IMU signal of the secondary clock device and the IMU signal of the primary clock device; and performing clock synchronization with the primary clock device based on the signal phase offset. The method provided in this application helps improve clock synchronization efficiency.

## Description

This application claims priority to Chinese Patent Application No. 202211125142.1, filed with the China National Intellectual Property Administration on September 14, 2022, and entitled "CLOCK SYNCHRONIZATION METHOD AND SYSTEM, ELECTRONIC DEVICE, AND STORAGE MEDIUM", which is incorporated herein by reference in its entirety.

### TECHNICAL FIELD

This application relates to the communication field, and in particular, to a clock synchronization method and system, an electronic device, and a storage medium.

### BACKGROUND

In a wireless network, for a scenario in which low-latency data is transmitted, especially a scenario in which highly time-sensitive streaming media data is transmitted, clock synchronization between a transmitting end and a receiving end needs to be maintained.

Currently, there are many wireless clock synchronization technologies in fields of a wireless ad hoc network and a wireless sensor network. However, these wireless clock synchronization technologies cannot meet a requirement of a current wireless network due to complex implementation processes, or special requirements on hardware of a wireless network device, or not high enough clock synchronization precision due to software, or high energy consumption.

### SUMMARY

This application provides a clock synchronization method and system, an electronic device, and a storage medium, to help improve clock synchronization efficiency.

According to a first aspect, this application provides a clock synchronization method, applied to a secondary clock device, where the secondary clock device is a device that actively performs clock synchronization, and the method includes:
obtaining an inertial measurement unit IMU signal of the secondary clock device and an IMU signal of a primary clock device, where the primary clock device is a device that passively performs clock synchronization;
determining a signal phase offset based on the IMU signal of the secondary clock device and the IMU signal of the primary clock device; and
performing clock synchronization with the primary clock device based on the signal phase offset.

In this application, clock calibration is performed based on a signal phase difference, so that a clock calibration procedure can be simplified, and clock synchronization between devices can be completed without a complex interaction procedure between the devices, thereby improving clock synchronization efficiency.

In a possible implementation, the determining a signal phase offset based on the IMU signal of the secondary clock device and the IMU signal of the primary clock device includes:
performing autocorrelation calculation on the IMU signal of the secondary clock device and the IMU signal of the primary clock device; and
determining the signal phase offset based on an autocorrelation calculation result.

In this application, the signal phase offset is determined through autocorrelation calculation, so that the signal phase offset can be more accurately and quickly determined, thereby improving clock synchronization efficiency.

In a possible implementation, before the determining a signal phase offset based on the IMU signal of the secondary clock device and the IMU signal of the primary clock device, the method further includes:
determining a waveform fitting degree between the IMU signal of the secondary clock device and the IMU signal of the primary clock device.

In this application, a similarity between the IMU signal of the secondary clock device and the IMU signal of the primary clock device is determined, so that clock synchronization can be performed when the similarity is high, thereby improving precision of clock synchronization.

In a possible implementation, the method further includes:
if detecting a preset event, determining a first moment of the preset event in the IMU signal of the secondary clock device and a second moment of the preset event in the IMU signal of the primary clock device;
determining a time difference based on the first moment and the second moment; and
performing clock synchronization based on the time difference.

In this application, clock synchronization is further performed based on a time difference corresponding to an event in IMU signals of different devices, so that the precision of clock synchronization can be further improved.

In a possible implementation, the obtaining an IMU signal of a primary clock device includes:
periodically sending a signal request to the primary clock device, to obtain the IMU signal of the primary clock device.

In this application, the IMU signal of the primary clock device is periodically obtained, so that clock synchronization can be periodically performed, thereby improving clock synchronization efficiency.

In a possible implementation, the obtaining an IMU signal of a primary clock device includes:
sending a signal request to the primary clock device in response to the detected preset event, to obtain the IMU signal of the primary clock device.

In this application, the IMU signal of the primary clock device is obtained in an event-triggering manner, so that clock synchronization can be performed as required, thereby improving flexibility of clock synchronization, and reducing resource occupation in devices and signaling overheads between devices.

In a possible implementation, the obtaining an IMU signal of a primary clock device includes:
periodically receiving the IMU signal sent by the primary clock device.

In this application, the primary clock device actively sends the IMU signal, so that signal requests of the secondary clock device can be reduced, thereby reducing signaling interaction between devices.

In a possible implementation, the obtaining an IMU signal of a primary clock device includes:
receiving the IMU signal sent by the primary clock device, where the IMU signal of the primary clock device is sent by the primary clock device in response to the detected preset event.

According to a second aspect, this application provides a clock synchronization method, applied to a primary clock device, where the primary clock device is a device that passively performs clock synchronization, and the method includes:
sending an inertial measurement unit IMU signal of the primary clock device to a secondary clock device, so that the secondary clock device performs clock synchronization based on an IMU signal of the secondary clock device and the IMU signal of the primary clock device.

In a possible implementation, the sending an inertial measurement unit IMU signal of the primary clock device to a secondary clock device includes:
sending the IMU signal of the primary clock device to the secondary clock device in response to a received signal request sent by the secondary clock device.

In a possible implementation, the sending an inertial measurement unit IMU signal of the primary clock device to a secondary clock device includes:
periodically sending the inertial measurement unit IMU signal of the primary clock device to the secondary clock device.

In a possible implementation, the sending an inertial measurement unit IMU signal of the primary clock device to a secondary clock device includes:
sending the IMU signal of the primary clock device to the secondary clock device in response to a detected preset event.

According to a third aspect, this application provides a clock synchronization apparatus. The clock synchronization apparatus includes modules/units for performing the method according to the first aspect or any one of the possible designs of the first aspect. The modules/units may be implemented by hardware, or may be implemented by hardware executing corresponding software.

According to a fourth aspect, this application provides a clock synchronization apparatus. The clock synchronization apparatus includes modules/units for performing the method according to the second aspect or any one of the possible designs of the second aspect. The modules/units may be implemented by hardware, or may be implemented by hardware executing corresponding software.

According to a fifth aspect, this application provides a secondary clock device, including a processor and a memory. The memory is configured to store a computer program, and the processor is configured to run the computer program, to implement the clock synchronization method according to the first aspect.

According to a sixth aspect, this application provides a primary clock device, including a processor and a memory. The memory is configured to store a computer program, and the processor is configured to run the computer program, to implement the clock synchronization method according to the second aspect.

According to a seventh aspect, this application provides a clock synchronization system, including the secondary clock device according to the fifth aspect and the primary clock device according to the sixth aspect.

According to an eighth aspect, this application provides a computer-readable storage medium. The computer-readable storage medium stores a computer program, and when the computer program is run on a computer, the computer is enabled to perform the clock synchronization method according to the first aspect or the second aspect.

According to a ninth aspect, this application provides a computer program. When the computer program is run on a processor of a secondary clock device, the secondary clock device is enabled to perform the clock synchronization method according to the first aspect; or when the computer program is run on a processor of a primary clock device, the primary clock device is enabled to perform the clock synchronization method according to the second aspect.

In a possible design, the program in the ninth aspect may be fully or partially stored on a storage medium that is encapsulated with a processor, or may be fully or partially stored on a memory that is not encapsulated with a processor.

### BRIEF DESCRIPTION OF DRAWINGS

FIG. 1 is a diagram of a structure of an electronic device according to an embodiment of this application;
FIG. 2 is a diagram of an architecture of an application scenario according to an embodiment of this application;
FIG. 3 is a schematic flowchart of a clock synchronization method according to an embodiment of this application;
FIG. 4 is a diagram of a waveform of an IMU signal according to an embodiment of this application;
FIG. 5 is a schematic flowchart of a clock synchronization method according to another embodiment of this application;
FIG. 6 is a schematic flowchart of a clock synchronization method according to still another embodiment of this application;
FIG. 7 is a schematic flowchart of a clock synchronization method according to yet another embodiment of this application;
FIG. 8 is a schematic flowchart of a clock synchronization method according to still yet another embodiment of this application;
FIG. 9 is a diagram of a waveform of an IMU signal according to another embodiment of this application;
FIG. 10 is a diagram of a waveform of an IMU signal according to still another embodiment of this application;
FIG. 11 is a diagram of a waveform of an IMU signal according to yet another embodiment of this application;
FIG. 12 is a diagram of a structure of a clock synchronization apparatus according to an embodiment of this application; and
FIG. 13 is a diagram of a structure of a clock synchronization apparatus according to another embodiment of this application.

### DESCRIPTION OF EMBODIMENTS

In embodiments of this application, unless otherwise specified, the character "/" indicates an "or" relationship between associated objects. For example, A/B may represent A or B. The term "and/or" describes an association relationship between associated objects, and represents that three relationships may exist. For example, A and/or B may represent the following three cases: Only A exists, both A and B exist, and only B exists.

It should be noted that, in embodiments of this application, terms such as "first" and "second" are merely intended for distinction in description, and shall not be understood as an indication or implication of relative importance or an implicit indication of a quantity of indicated technical features, or an indication or implication of a sequence.

In embodiments of this application, "at least one" means one or more, and "a plurality of" means two or more. In addition, "at least one of the following items (pieces)" or a similar expression thereof means any combination of these items, including a single item (piece) or any combination of a plurality of items (pieces). For example, at least one item (piece) of A, B, or C may represent A, B, C, A and B, A and C, B and C, or A, B, and C. A, B, and C each may be an element, or may be a set that includes one or more elements.

In embodiments of this application, "example", "in some embodiments", "in another embodiment", or the like represent giving an example, an illustration, or a description. Any embodiment or design scheme described as an "example" in this application should not be explained as being more preferred or having more advantages than another embodiment or design scheme. Specifically, the term "example" is for presenting a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences are not emphasized. In embodiments of this application, communication and transmission may be interchangeably used sometimes. It should be noted that meanings expressed by the terms are consistent when differences are not emphasized. For example, transmission may include sending and/or receiving, and may be a noun or a verb.

In embodiments of this application, "equal to" may be used together with "greater than", and is applicable to a technical solution used in a case of "greater than"; or may be used together with "less than", and is applicable to a technical solution used in a case of "less than". It should be noted that, when "equal to" is used together with "greater than", "equal to" shall not be used together with "less than"; and when "equal to" is used together with "less than", "equal to" shall not be used together with "greater than".

Currently, there are many wireless clock synchronization technologies in fields of a wireless ad hoc network and a wireless sensor network, for example, a precision time synchronization protocol (Precision Time Synchronization Protocol, PTP), a network time synchronization protocol (Network Time Protocol, NTP), and reference broadcast synchronization (Reference Broadcast Synchronization, RBS). However, these wireless clock synchronization technologies cannot meet a requirement of a current wireless network due to complex implementation processes, or special requirements on hardware of a wireless network device, or not high enough clock synchronization precision due to software, or high energy consumption.

Based on the foregoing problems, an embodiment of this application provides a clock synchronization method, which is applied to an electronic device. The electronic device may be a fixed terminal, for example, a notebook computer or a desktop computer. The electronic device may also be a mobile terminal. The mobile terminal may also be referred to as user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The mobile terminal may be a station (STATION, ST) in a WLAN; or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or another processing device connected to a wireless modem, a vehicle-mounted device, an Internet of Vehicles terminal, a computer, a laptop computer, a handheld communication device, a handheld computing device, a satellite radio device, a wireless modem card, a television set top box (set top box, STB), customer premises equipment (customer premises equipment, CPE), and/or another device configured to perform communication in a wireless system, or a mobile terminal in a next-generation communication system like a 5G network, or a mobile terminal in a future evolved public land mobile network (Public Land Mobile Network, PLMN), or the like. Alternatively, the electronic device may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction.

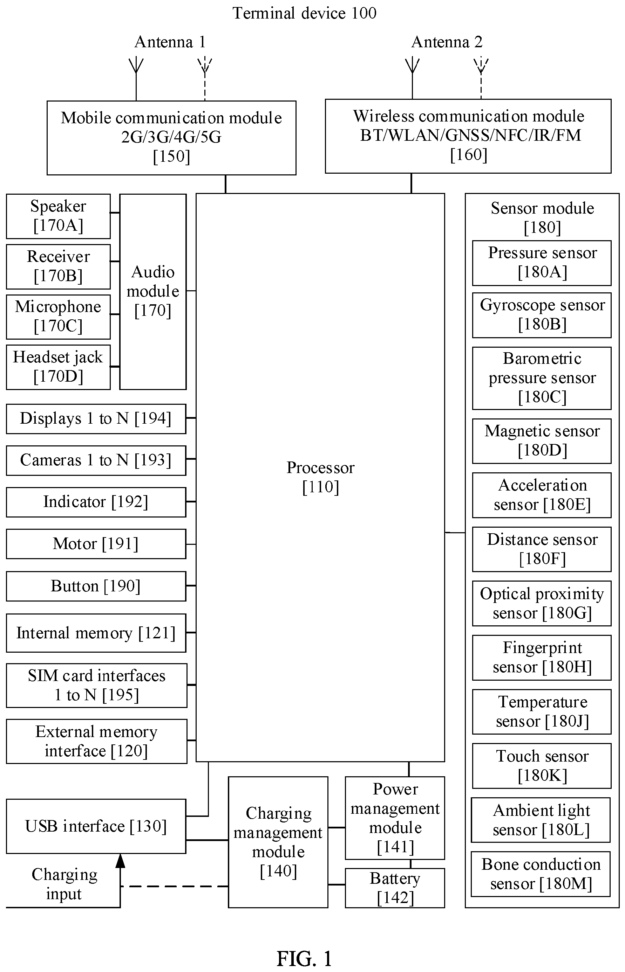

FIG. 1 first shows a diagram of an example of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may generate an operation control signal based on an instruction operation code and a time sequence signal, to complete control of instruction reading and instruction execution.

A memory may be further disposed in the processor 110, and is configured to store an instruction and data. In some embodiments, the memory in the processor 110 is a cache memory. The memory may store an instruction or data that has been used or cyclically used by the processor 110. If the processor 110 needs to use the instruction or the data again, the processor may directly invoke the instruction or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 via the I2S bus, to implement communication between the processor 110 and the audio module 170. In some embodiments, the audio module 170 may transfer an audio signal to the wireless communication module 160 through the I2S interface, to implement a function of answering a call by using a Bluetooth headset.

The PCM interface may also be configured to: perform audio communication; and sample, quantize, and encode an analog signal. In some embodiments, the audio module 170 may be coupled to the wireless communication module 160 through a PCM bus interface. In some embodiments, the audio module 170 may alternatively transfer an audio signal to the wireless communication module 160 through the PCM interface, to implement a function of answering a call by using a Bluetooth headset. Both the I2S interface and the PCM interface may be configured to perform audio communication.

A UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transfer an audio signal to the wireless communication module 160 through the UART interface, to implement a function of playing music by using a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured for a control signal for a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio by using the headset. The interface may be further configured to connect to another terminal device, for example, an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. When charging the battery 142, the charging management module 140 may further supply power to the terminal device by using the power management module 141.

The power management module 141 is configured to be connected to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global satellite positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based enhancement system (satellite-based augmentation systems, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation; and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum-dot light-emitting diode (quantum-dot light-emitting diode, QLED), or the like. In some embodiments, the electronic device 100 may include one or N displays 194, where N is a positive integer greater than 1.

The electronic device 100 may implement a photographing function by using the camera 193, the ISP, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected onto the photosensitive element. The photosensitive element may be a charge coupled device (charge coupled device, CCD), or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information by referring to a structure of a biological neural network, for example, a transfer mode between human brain neurons, and may further continuously perform self-learning. The NPU may implement applications such as intelligent cognition of the electronic device 100, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function such as music playing and recording by using the audio module 170, the speaker 170A, the receiver 170B, the microphone 170C, the headset jack 170D, the application processor, and the like.

The audio module 170 is configured to convert digital audio information into an analog audio signal for outputting, and is further configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or a voice message is received by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, reduce noise, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (Cellular Telecommunications Industry Association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating an SMS message is executed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a motion-sensing game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a flip phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations in various directions (usually on three axes) of the electronic device 100, and may detect a magnitude and a direction of the gravity when the electronic device 100 is still. The acceleration sensor 180E may be further configured to identify a posture of the terminal device, and is used in, for example, switching between a landscape mode and a portrait mode, or an application, for example, a pedometer.

The distance sensor 180F is configured to measure a distance. The electronic device 100 may measure the distance in an infrared manner or a laser manner. In some embodiments, in a photographing scenario, the electronic device 100 may use the distance sensor 180F to measure a distance, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically turn off a screen for power saving. The optical proximity sensor 180G may also be used in a leather case mode or a pocket mode, to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is lower than another threshold, the electronic device 100 heats the battery 142, to prevent the electronic device 100 from being shut down abnormally due to a low temperature. In some other embodiments, when the temperature is lower than still another threshold, the electronic device 100 boosts an output voltage of the battery 142, to avoid abnormal shutdown caused by a low temperature.

The touch sensor 180K is also referred to as a "touch control device". The touch sensor 180K may be disposed on the display 194, and the touch sensor 180K and the display 194 constitute a touchscreen, which is also referred to as a "touch control screen". The touch sensor 180K is configured to detect a touch operation performed on or near the touch sensor. The touch sensor may transfer the detected touch operation to the application processor, to determine a type of the touch event. A visual output related to the touch operation may be provided by using the display 194. In some other embodiments, the touch sensor 180K may alternatively be disposed on a surface of the electronic device 100, and is located at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse, to receive a blood pressure beating signal. In some embodiments, the bone conduction sensor 180M may also be disposed in a headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt, and may also be configured to provide a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may also be compatible with different types of SIM cards. The SIM card interface 195 may also be compatible with an external storage card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

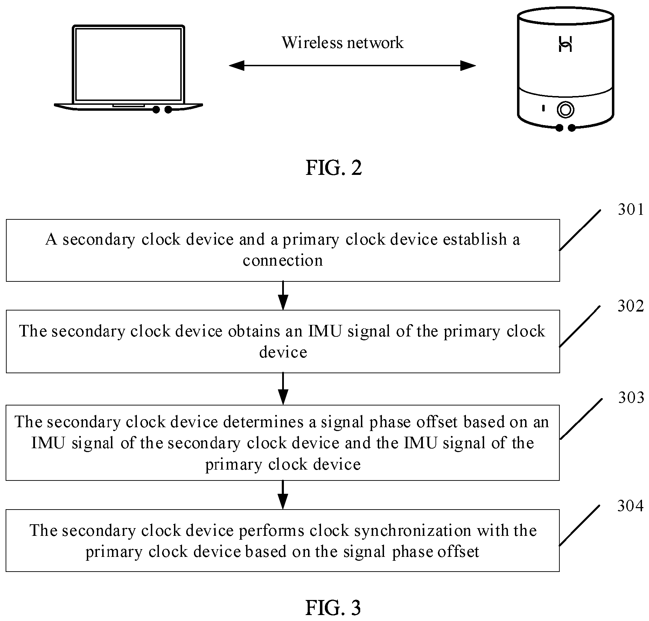

The following describes a clock synchronization method in embodiments of this application with reference to FIG. 2 to FIG. 10.

FIG. 2 is a diagram of an architecture of an application scenario according to an embodiment of this application. As shown in FIG. 2, the foregoing application scenario includes a first device and a second device. The first device and the second device may be the electronic device 100. A network in which the first device and the second device are located may be a wireless network. The wireless network may include a wireless fidelity (Wireless Fidelity, Wi-Fi) network, a Bluetooth (Bluetooth) network, a Bluetooth low energy (Bluetooth Low Energy, BLE) network, or a Zigbee (Zigbee) network. This is not specially limited in this application.

In some optional embodiments, the network in which the first device and the second device are located may alternatively be a wired network, for example, a data exchange center network.

FIG. 3 is a schematic flowchart of a clock synchronization method according to an embodiment of this application. The method specifically includes the following steps.

Step 301: A secondary clock device and a primary clock device establish a connection.

Specifically, the first device may send a request to the second device, to establish a connection to the second device. Alternatively, the second device may send a request to the first device, to establish a connection to the first device. A manner of establishing a connection between the first device and the second device is not specially limited in embodiments of this application. A network connection between the first device and the second device may be a Wi-Fi connection, a Bluetooth connection, or a BLE connection.

It may be understood that after establishing the connection, the first device and the second device may determine respective clock types through negotiation. The clock types may include a primary clock type and a secondary clock type. The secondary clock may be a clock that actively requests clock synchronization, and the primary clock may be a clock that passively performs clock synchronization. An electronic device having the secondary clock may be the secondary clock device, and an electronic device having the primary clock may be the primary clock device. Therefore, the first device may be the primary clock device, and the second device may be the secondary clock device. Alternatively, the first device may be the secondary clock device, and the second device may be the primary clock device. That is, the primary clock device and the secondary clock device may be determined through negotiation after the first device and the second device establish the connection. This is not specially limited in embodiments of this application.

After the first device and the second device establish the connection, the first device and the second device may further cache an inertial measurement unit (Inertial Measurement Unit, IMU) signal. The IMU signal may be measured by using an IMU sensor.

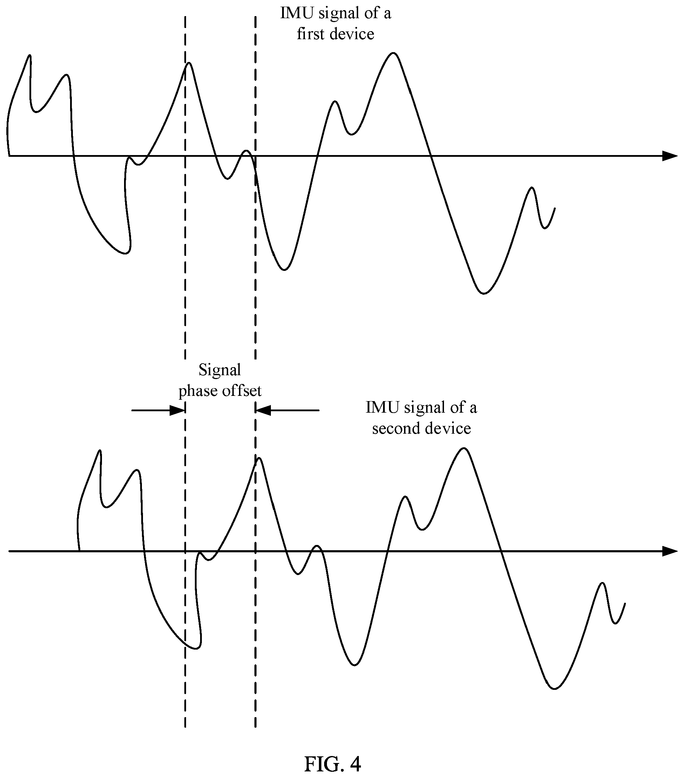

FIG. 4 is a diagram of a waveform of the IMU signal. Refer to FIG. 4. An upper part of this figure shows a waveform diagram of an IMU signal of the first device, and a lower part of this figure shows a waveform diagram of an IMU signal of the second device. It may be learned that there is a signal phase offset between the waveform diagrams of the IMU signals of the first device and the second device. As a result, clocks are not synchronized.

Step 302: The secondary clock device obtains an IMU signal of the primary clock device.

Specifically, the IMU signal of the primary clock device may be an IMU signal within a period of time. For example, duration of the time period may be 10s, but this does not constitute a limitation on embodiments of this application. In some embodiments, the duration may also be another duration. Manners in which the secondary clock device obtains the IMU signal of the primary clock device may include the following:
Manner 1: The secondary clock device actively obtains the IMU signal of the primary clock device from the primary clock device in a periodic requesting manner.

The manner in which the secondary clock device actively obtains the IMU signal of the primary clock device from the primary clock device in the periodic requesting manner may be as follows: The secondary clock device may preset a first timer, and may actively send a signal request to the primary clock device after the first timer expires, to request to obtain the IMU signal of the primary clock device.

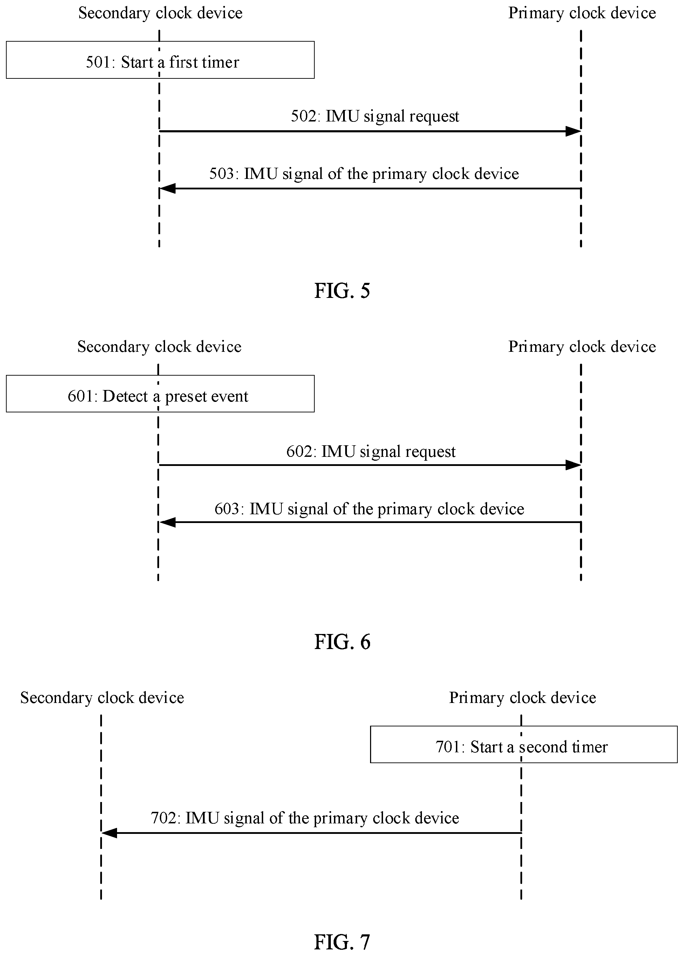

An example in which the first device is the secondary clock device and the second device is the primary clock device is used to describe, with reference to FIG. 5, the manner in which the secondary clock device actively obtains the IMU signal of the primary clock device from the primary clock device in the periodic requesting manner.

FIG. 5 is a schematic flowchart of a clock synchronization method according to another embodiment of this application. The method specifically includes the following steps.

Step 501: The secondary clock device starts the first timer.

Specifically, duration of the first timer may be preset, and the first timer may be periodically started.

Step 502: After the first timer expires, the secondary clock device sends the signal request to the primary clock device. Correspondingly, the primary clock device receives the signal request sent by the secondary clock device.

Specifically, the signal request may include a timestamp. The timestamp may indicate a start moment of a to-be-requested IMU signal of the primary clock device.

It may be understood that after the first timer expires, the first timer may be restarted. In this way, the signal request can be periodically sent, to obtain the IMU signal of the primary clock device.

Step 503: The primary clock device sends the IMU signal of the primary clock device to the secondary clock device. Correspondingly, the secondary clock device receives the IMU signal of the primary clock device sent by the primary clock device.

Specifically, after receiving the signal request sent by the secondary clock device, the primary clock device sends the IMU signal of the primary clock device to the secondary clock device. The IMU signal may be a signal captured from the timestamp that indicates the start moment.

In some optional embodiments, after receiving the signal request sent by the secondary clock device, the primary clock device may alternatively refuse to send the IMU signal of the primary clock device to the secondary clock device, to meet a requirement that the primary clock device does not perform clock synchronization in some specific conditions. For example, if the primary clock device agrees to send the IMU signal, the primary clock device may send a consent notification to the secondary clock device, to notify the secondary clock device that the primary clock device agrees to send the IMU signal. If the primary clock device refuses to send the IMU signal, the primary clock device may send a refusal notification to the secondary clock device, to notify the secondary clock device that the primary clock device refuses to send the IMU signal.

It may be understood that the foregoing embodiments are described by using only an example in which the first device is the secondary clock device and the second device is the primary clock device. However, this does not constitute a limitation on embodiments of this application. In some embodiments, alternatively, the first device may be the primary clock device, and the second device may be the secondary clock device.

Manner 2: The secondary clock device actively obtains the IMU signal of the primary clock device from the primary clock device in an event triggering manner.

The manner in which the secondary clock device actively obtains the IMU signal of the primary clock device from the primary clock device in the event triggering manner may be as follows: The secondary clock device may detect a preset event, and may actively send a signal request to the primary clock device after detecting the preset event, to request to obtain the IMU signal of the primary clock device. The preset event may include but is not limited to the following: The secondary clock device touches the primary clock device. For example, a user holds the secondary clock device to touch the primary clock device, or a user holds the primary clock device to touch the secondary clock device. Alternatively, a vibration event occurs on the secondary clock device and the primary clock device at the same time. For example, after placing the secondary clock device and the primary clock device on a desktop, the user taps the desktop, so that the secondary clock device and the primary clock device vibrate at the same time.

An example in which the first device is the secondary clock device and the second device is the primary clock device is used to describe, with reference to FIG. 6, the manner in which the secondary clock device actively obtains the IMU signal of the primary clock device from the primary clock device in the event triggering manner.

FIG. 6 is a schematic flowchart of a clock synchronization method according to still another embodiment of this application. The method specifically includes the following steps.

Step 601: The secondary clock device detects the preset event.

Step 602: After detecting the preset event, the secondary clock device sends the signal request to the primary clock device. Correspondingly, the primary clock device receives the signal request sent by the secondary clock device.

Step 603: The primary clock device sends the IMU signal of the primary clock device to the secondary clock device. Correspondingly, the secondary clock device receives the IMU signal of the primary clock device sent by the primary clock device.

It may be understood that the foregoing embodiments are described by using only an example in which the first device is the secondary clock device and the second device is the primary clock device. However, this does not constitute a limitation on embodiments of this application. In some embodiments, alternatively, the first device may be the primary clock device, and the second device may be the secondary clock device.

Manner 3: The primary clock device actively sends the IMU signal of the primary clock device to the secondary clock device in a periodic sending manner.

It may be understood that, in the manner 1 and the manner 2, the secondary clock device obtains the IMU signal of the primary clock device in an active requesting manner. In the manner 3, the secondary clock device may also obtain the IMU signal of the primary clock device in a passive receiving manner. For example, the primary clock device actively sends the IMU signal of the primary clock device to the secondary clock device in the periodic sending manner, and the secondary clock device may passively receive the IMU signal actively sent by the primary clock device.

An example in which the first device is the secondary clock device and the second device is the primary clock device is used to describe, with reference to FIG. 7, the manner in which the primary clock device actively sends the IMU signal of the primary clock device to the secondary clock device in the periodic sending manner.

Step 701: The primary clock device starts a second timer.

Specifically, duration of the second timer may be preset, and the second timer may be periodically started. The duration of the second timer may be the same as or different from duration of a first timer. This is not specially limited in embodiments of this application.

Step 702: After the second timer expires, the primary clock device actively sends the IMU signal of the primary clock device to the secondary clock device. Correspondingly, the secondary clock device receives the IMU signal of the primary clock device sent by the primary clock device.

Specifically, after receiving the signal request sent by the secondary clock device, the primary clock device sends the IMU signal of the primary clock device to the secondary clock device.

It may be understood that after the second timer expires, the second timer may be restarted. In this way, the IMU signal of the primary clock device can be periodically sent.

Manner 4: The primary clock device actively sends the IMU signal of the primary clock device to the secondary clock device in an event triggering manner.

In addition to actively sending the IMU signal to the secondary clock device in the event triggering manner, the primary clock device may actively send the IMU signal to the secondary clock device in the event triggering manner.

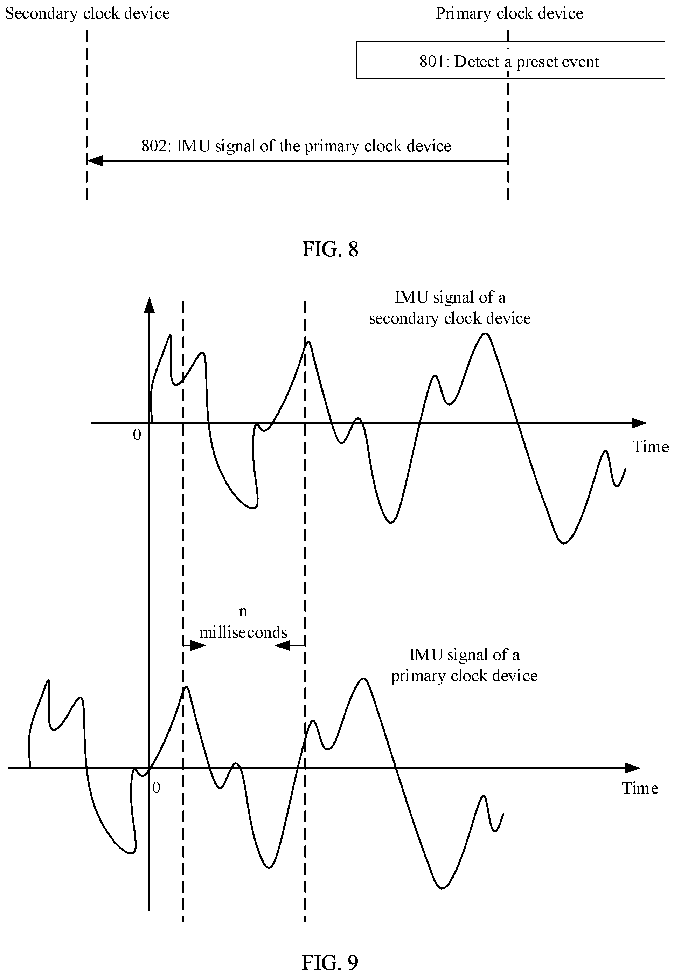

An example in which the first device is the secondary clock device and the second device is the primary clock device is used to describe, with reference to FIG. 8, the manner in which the primary clock device actively sends the IMU signal of the primary clock device to the secondary clock device in the event triggering manner.

Step 801: The primary clock device detects the preset event.

Step 802: After detecting the preset event, the primary clock device sends the IMU signal of the primary clock device to the secondary clock device. Correspondingly, the secondary clock device receives the IMU signal of the primary clock device sent by the primary clock device.

It may be understood that the foregoing embodiments are described by using only an example in which the first device is the secondary clock device and the second device is the primary clock device. However, this does not constitute a limitation on embodiments of this application. In some embodiments, alternatively, the first device may be the primary clock device, and the second device may be the secondary clock device.

Step 303: The secondary clock device determines a signal phase offset based on an IMU signal of the secondary clock device and the IMU signal of the primary clock device.

Specifically, the IMU signal of the secondary clock device may also be an IMU signal within a period of time. For example, duration of the time period may be 10s, but this does not constitute a limitation on embodiments of this application. In some embodiments, the duration may also be another duration.

After obtaining the IMU signal of the primary clock device, the secondary clock device may determine the signal phase offset based on the IMU signal of the secondary clock device and the IMU signal of the primary clock device. For example, the secondary clock device may perform autocorrelation calculation on the IMU signal of the secondary clock device and the IMU signal of the primary clock device. In this way, the secondary clock device may determine the signal phase offset based on an autocorrelation calculation result. For an algorithm of autocorrelation calculation, refer to an existing correlation algorithm. Details are not described herein again.

In some optional embodiments, before performing autocorrelation calculation, the secondary clock device may further determine whether the IMU signal of the secondary clock device is similar to the IMU signal of the primary clock device. If the IMU signal of the secondary clock device is similar to the IMU signal of the primary clock device, the secondary clock device may further determine the signal phase offset based on the IMU signal of the secondary clock device and the IMU signal of the primary clock device. If the IMU signal of the secondary clock device is not similar to the IMU signal of the primary clock device, the secondary clock device may stop calculation of the signal phase offset between the IMU signal of the secondary clock device and the IMU signal of the primary clock device.

The following describes a manner of calculating the signal phase offset by using an example with reference to FIG. 9. Refer to FIG. 9. An upper part of this figure shows a waveform diagram 901 of the IMU signal of the secondary clock device, and a lower part of this figure shows a waveform diagram 902 of the IMU signal of the primary clock device. A waveform fitting degree between the waveform diagram 901 of the IMU signal and the waveform diagram 902 of the IMU signal is high. That is, the waveform diagram 901 of the IMU signal is similar to the waveform diagram 902 of the IMU signal. Therefore, the signal phase offset between the IMU signal of the secondary clock device and the IMU signal of the primary clock device may be further calculated. It can be learned from FIG. 9 that a phase difference between the waveform diagram 901 of the IMU signal and the waveform diagram 902 of the IMU signal is n milliseconds. Therefore, through autocorrelation calculation between the waveform diagram 901 of the IMU signal and the waveform diagram 902 of the IMU signal, it can be determined that the signal phase offset between the waveform diagram 901 of the IMU signal and the waveform diagram 902 of IMU signal is n.

Step 304: The secondary clock device performs clock synchronization with the primary clock device based on the signal phase offset.

Specifically, after obtaining the signal phase offset, the secondary clock may align the IMU signal of the secondary clock with the IMU signal of the primary clock device based on the signal phase offset, to complete clock synchronization between the secondary clock device and the primary clock device.

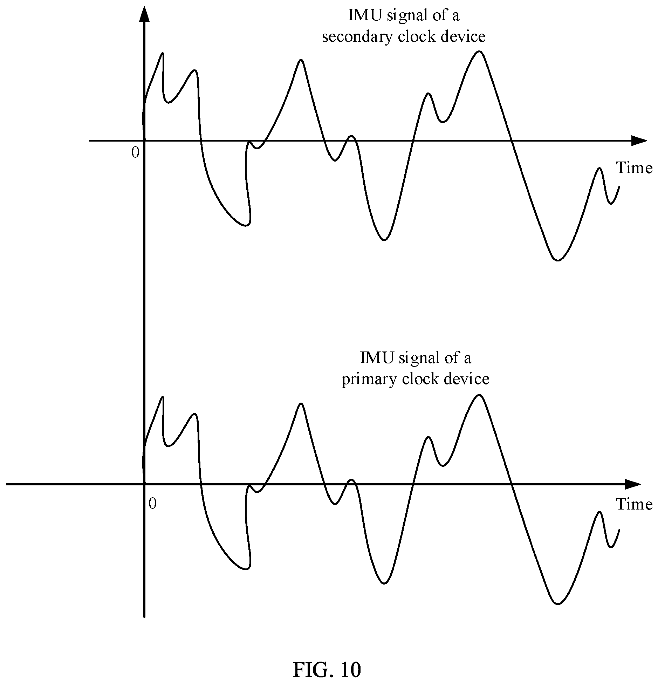

The waveform diagrams of the IMU signals shown in FIG. 9 are used as examples. After the IMU signal of the secondary clock device is aligned with the IMU signal of the primary clock device based on the signal phase offset, waveform diagrams of the signals shown in FIG. 10 may be obtained. It can be learned from the waveform diagrams of the IMU signals in FIG. 10 that a reference moment of the clock of the secondary clock device is aligned with a reference moment of the clock of the primary clock device, so that clock synchronization can be implemented.

In some optional embodiments, to further improve precision of clock synchronization, a time difference may be further calculated based on moments at which an event occurs on different devices. Clock synchronization may be performed based on the time difference. For example, when a preset event occurs, a moment at which the preset event occurs on the secondary clock device is t1, and a moment at which the preset event occurs on the secondary clock device is t2. Because the IMU signal of the secondary clock device has been aligned with the IMU signal of the primary clock device, a time difference t1-t2 is a time difference between the secondary clock and the primary clock. The time difference t1-t2 of the clock between the secondary clock device and the primary clock device is adjusted to complete clock synchronization between secondary clock and the primary clock.

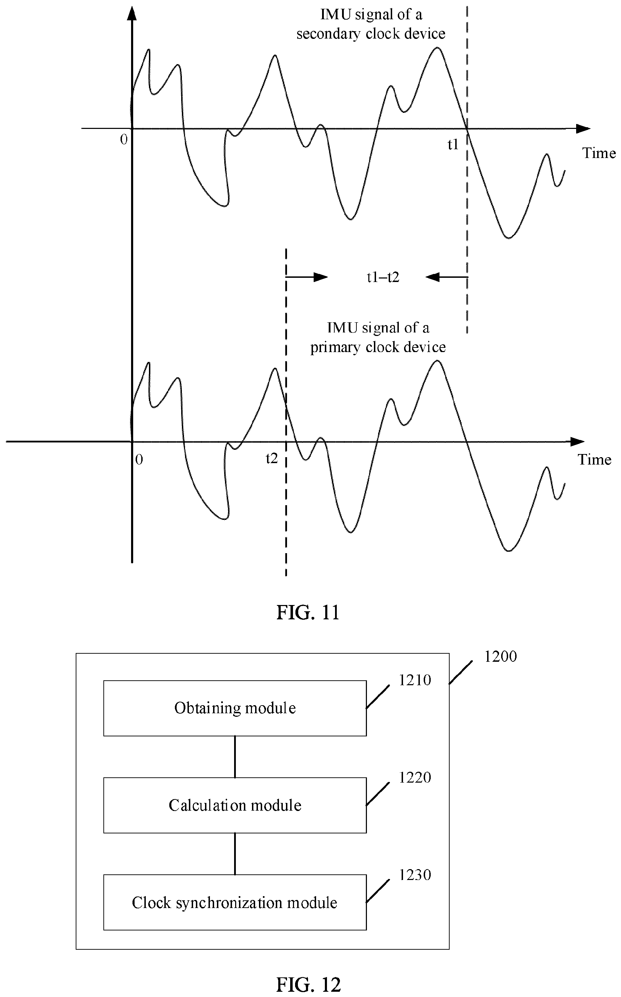

With reference to FIG. 11, an example of clock synchronization based on the time difference is described herein. Refer to FIG. 11. A waveform 1101 is the waveform of the IMU signal of the secondary clock device. After a preset event 1 is detected, a corresponding moment of the preset event 1 in the waveform 1101 is t1. A waveform 1102 is the waveform of the IMU signal of the primary clock device. After the preset event 1 is detected, a corresponding moment of the preset event 1 in the waveform 1102 is t2. Then, the secondary clock device may determine the time difference t1-t2 based on a difference between the moment t1 and the moment t2, and may adjust the clock in the secondary clock device based on the time difference t1-t2, to implement clock synchronization with the clock in the primary clock device.

In this embodiment of this application, clock calibration is performed based on a signal phase difference, so that a clock calibration procedure can be simplified, and clock synchronization between devices can be completed without a complex interaction procedure between the devices, thereby improving clock synchronization efficiency.

FIG. 12 is a diagram of a structure of a clock synchronization apparatus according to an embodiment of this application. As shown in FIG. 12, the clock synchronization apparatus 1200 is used in a secondary clock device. The secondary clock device is a device that actively performs clock synchronization. The clock synchronization apparatus 1200 may include an obtaining module 1210, a calculation module 1220, and a clock synchronization module 1230.

The obtaining module 1210 is configured to obtain an inertial measurement unit IMU signal of the secondary clock device and an IMU signal of a primary clock device. The primary clock device is a device that passively performs clock synchronization.

The calculation module 1220 is configured to determine a signal phase offset based on the IMU signal of the secondary clock device and the IMU signal of the primary clock device.

The clock synchronization module 1230 is configured to perform clock synchronization with the primary clock device based on the signal phase offset.

In a possible implementation, the calculation module 1220 is specifically configured to: perform autocorrelation calculation on the IMU signal of the secondary clock device and the IMU signal of the primary clock device; and determine the signal phase offset based on an autocorrelation calculation result.

In a possible implementation, the clock synchronization apparatus 1200 further includes:
a determining module, configured to determine a waveform fitting degree between the IMU signal of the secondary clock device and the IMU signal of the primary clock device.

In a possible implementation, the clock synchronization module 1230 is further configured to: if detecting a preset event, determine a first moment of the preset event in the IMU signal of the secondary clock device and a second moment of the preset event in the IMU signal of the primary clock device;
determine a time difference based on the first moment and the second moment; and
performing clock synchronization based on the time difference.

In a possible implementation, the clock synchronization module 1230 is specifically configured to periodically send a signal request to the primary clock device, to obtain the IMU signal of the primary clock device.

In a possible implementation, the clock synchronization module 1230 is specifically configured to send a signal request to the primary clock device in response to the detected preset event, to obtain the IMU signal of the primary clock device.

In a possible implementation, the clock synchronization module 1230 is specifically configured to periodically receive the IMU signal sent by the primary clock device.

In a possible implementation, the clock synchronization module 1230 is specifically configured to receive the IMU signal sent by the primary clock device, where the IMU signal of the primary clock device is sent by the primary clock device in response to the detected preset event.

The clock synchronization apparatus 1200 provided in the embodiment shown in FIG. 12 may be configured to perform the technical solutions in the method embodiments in this application. For an implementation principle and technical effect of the clock synchronization apparatus, further refer to related descriptions in the method embodiments.

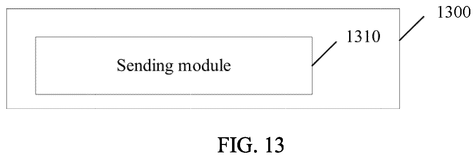

FIG. 13 is a diagram of a structure of a clock synchronization apparatus according to another embodiment of this application. As shown in FIG. 13, the clock synchronization apparatus 1300 is used in a primary clock device. The primary clock device is a device that passively performs clock synchronization. The clock synchronization apparatus 1300 may include a sending module 1310.

The sending module 1310 is configured to send an inertial measurement unit IMU signal of the primary clock device to a secondary clock device, so that the secondary clock device performs clock synchronization based on an IMU signal of the secondary clock device and the IMU signal of the primary clock device.

In a possible implementation, the sending module 1310 is specifically configured to send the IMU signal of the primary clock device to the secondary clock device in response to a received signal request sent by the secondary clock device.

In a possible implementation, the sending module 1310 is specifically configured to periodically send the inertial measurement unit IMU signal of the primary clock device to the secondary clock device.

In a possible implementation, the sending module 1310 is specifically configured to send the IMU signal of the primary clock device to the secondary clock device in response to a detected preset event.

The clock synchronization apparatus 1300 provided in the embodiment shown in FIG. 13 may be configured to perform the technical solutions in the method embodiments in this application. For an implementation principle and technical effect of the clock synchronization apparatus, further refer to related descriptions in the method embodiments.

It should be understood that division of the modules of the clock synchronization apparatus 1200 shown in FIG. 12 and the clock synchronization apparatus 1300 shown in FIG. 13 is merely logical function division. During actual implementation, some or all of the modules may be integrated into one physical entity, or may be physically separated. In addition, all of the modules may be implemented in a form of software invoked by using a processing element or may be implemented in a form of hardware. Alternatively, some modules may be implemented in a form of software invoked by using the processing element, and some modules are implemented in a form of hardware. For example, a detection module may be an independently disposed processing element, or may be integrated in one chip of an electronic device for implementation. Implementations of other modules are similar to the implementation of the modules. In addition, all or some of the modules may be integrated together, or may be implemented independently. In an implementation process, steps in the foregoing method or the foregoing modules can be implemented by using a hardware integrated logic circuit in the processing element, or by using instructions in a form of software.

For example, the foregoing modules may be one or more integrated circuits configured to implement the foregoing method, for example, one or more application-specific integrated circuits (Application-Specific Integrated Circuits, ASICs for short), or one or more microprocessors (Digital Signal Processor, DSP for short) or one or more field programmable gate arrays (Field Programmable Gate Array, FPGA for short) and the like. For another example, the modules may be integrated together and implemented in a form of a system-on-a-chip (System-On-a-Chip, SOC for short below).

In the foregoing embodiments, the processor may include, for example, a CPU, a DSP, a microcontroller, or a digital signal processor, and may further include a GPU, an embedded neural-network processing unit (Neural-network Processing Unit, NPU for short), and an image signal processor (Image Signal Processor, ISP for short). The processor may further include a necessary hardware accelerator or a logic processing hardware circuit, for example, an ASIC, or one or more integrated circuits configured to control program execution of the technical solutions in this application. In addition, the processors may have a function of operating one or more software programs, and the software programs may be stored in a storage medium.

An embodiment of this application further provides a computer-readable storage medium. The computer-readable storage medium stores a computer program. When the computer program is run on a computer, the computer is enabled to perform the method provided in embodiments of this application.

An embodiment of this application further provides a computer program product. The computer program product includes a computer program. When the computer program is run on a computer, the computer is enabled to perform the method provided in embodiments of this application.

In embodiments of this application, "at least one" means one or more, and "a plurality of" means two or more. A term "and/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items" and a similar expression thereof mean any combination of these items, including a single item or any combination of plural items. For example, at least one item of a, b, or c may indicate a, b, c, a and b, a and c, b and c, or a, b, and c, where a, b, and c may be singular or plural.

A person of ordinary skill in the art may be aware that, with reference to embodiments disclosed in this specification, described units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, when any function is implemented in a form of a software functional unit and sold or used as an independent product, the function may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or a part of the steps of the method described in embodiments of this application. The foregoing storage medium includes any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementations of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A clock synchronization method, applied to a secondary clock device, wherein the secondary clock device is a device that actively performs clock synchronization, and the method comprises:
obtaining an inertial measurement unit IMU signal of the secondary clock device and an IMU signal of a primary clock device, wherein the primary clock device is a device that passively performs clock synchronization;
determining a signal phase offset based on the IMU signal of the secondary clock device and the IMU signal of the primary clock device; and
performing clock synchronization with the primary clock device based on the signal phase offset.

2. The method according to claim 1, wherein the determining a signal phase offset based on the IMU signal of the secondary clock device and the IMU signal of the primary clock device comprises:
performing autocorrelation calculation on the IMU signal of the secondary clock device and the IMU signal of the primary clock device; and
determining the signal phase offset based on an autocorrelation calculation result.

3. The method according to claim 1 or 2, wherein before the determining a signal phase offset based on the IMU signal of the secondary clock device and the IMU signal of the primary clock device, the method further comprises:
determining a waveform fitting degree between the IMU signal of the secondary clock device and the IMU signal of the primary clock device.

4. The method according to any one of claims 1 to 3, wherein the method further comprises:
if detecting a preset event, determining a first moment of the preset event in the IMU signal of the secondary clock device and a second moment of the preset event in the IMU signal of the primary clock device;
determining a time difference based on the first moment and the second moment; and
performing clock synchronization based on the time difference.

5. The method according to any one of claims 1 to 4, wherein the obtaining an IMU signal of a primary clock device comprises:
periodically sending a signal request to the primary clock device, to obtain the IMU signal of the primary clock device.

6. The method according to any one of claims 1 to 4, wherein the obtaining an IMU signal of a primary clock device comprises:
sending a signal request to the primary clock device in response to the detected preset event, to obtain the IMU signal of the primary clock device.

7. The method according to any one of claims 1 to 4, wherein the obtaining an IMU signal of a primary clock device comprises:
periodically receiving the IMU signal sent by the primary clock device.

8. The method according to any one of claims 1 to 4, wherein the obtaining an IMU signal of a primary clock device comprises:
receiving the IMU signal sent by the primary clock device, wherein the IMU signal of the primary clock device is sent by the primary clock device in response to the detected preset event.

9. A clock synchronization method, applied to a primary clock device, wherein the primary clock device is a device that passively performs clock synchronization, and the method comprises:
sending an inertial measurement unit IMU signal of the primary clock device to a secondary clock device, so that the secondary clock device performs clock synchronization based on an IMU signal of the secondary clock device and the IMU signal of the primary clock device.

10. The method according to claim 9, wherein the sending an inertial measurement unit IMU signal of the primary clock device to a secondary clock device comprises:
sending the IMU signal of the primary clock device to the secondary clock device in response to a received signal request sent by the secondary clock device.

11. The method according to claim 9, wherein the sending an inertial measurement unit IMU signal of the primary clock device to a secondary clock device comprises:
periodically sending the inertial measurement unit IMU signal of the primary clock device to the secondary clock device.

12. The method according to claim 9, wherein the sending an inertial measurement unit IMU signal of the primary clock device to a secondary clock device comprises:
sending the IMU signal of the primary clock device to the secondary clock device in response to a detected preset event.

13. A secondary clock device, comprising a processor and a memory, wherein the memory is configured to store a computer program, and the processor is configured to run the computer program, to implement the clock synchronization method according to any one of claims 1 to 8.

14. A primary clock device, comprising a processor and a memory, wherein the memory is configured to store a computer program, and the processor is configured to run the computer program, to implement the clock synchronization method according to any one of claims 9 to 12.

15. A clock synchronization system, comprising the secondary clock device according to claim 13 and the primary clock device according to claim 14.

16. A computer-readable storage medium, wherein the computer-readable storage medium stores a computer program, and when the computer program is run on a computer, the clock synchronization method according to any one of claims 1 to 12 is implemented.
